# EUROPÄISCHE PATENTSCHRIFT

(11) **EP 1 167 716 B1**
(45) Veröffentlichungstag und Bekanntmachung des Hinweises auf die Patenterteilung: **11.05.2005**
(21) Anmeldenummer: 01111798.3
(22) Anmeldetag: 16.05.2001
(51) Int. Cl.: F02B 27/02

(54) **Luftansaugkanalsystem für eine Brennkraftmaschine**
Air intake duct system for a combustion engine
Système de conduits d'air d'admission pour moteur à combustion

(30) Priorität: 01.07.2000 DE 10032072
(43) Veröffentlichungstag der Anmeldung: 02.01.2002
(73) Patentinhaber: Pierburg GmbH, 41460 Neuss (DE)
(72) Erfinder: Kühnel, Hans-Ulrich, 41239 Mönchengladbach (DE); Hüsges, Hans-Jürgen, 47877 Willich (DE)
(74) Vertreter: Ter Smitten, Hans

(56) Entgegenhaltungen:
- EP-A- 0 980 968
- DE-A- 19 756 332
- DE-A- 19 845 140
- DE-A- 19 849 119
- GB-A- 2 239 899
- US-A- 6 073 601

## Beschreibung

Die Erfindung betrifft ein Luftansaugkanalsystem für eine Brennkraftmaschine mit einem äußeren Gehäuse, das aus mindestens zwei Gehäuseteilen besteht, die über Dichtflächen miteinander verbunden sind, wobei das Gehäuse einen Sammeleinlasskanal aufweist, von dem zu Zylindern der Brennkraftmaschine führende Einzelansaugkanäle abzweigen, die jeweils durch Rippenelemente und Nabenelemente mit einer Antriebswelle verbunden sind, derart, dass die effektive Saugrohrlänge durch ein Verdrehen der Antriebswelle veränderbar ist.

Ein derartiges Luftansaugkanalsystem ist beispielsweise aus der DE 197 56 332 A1 bekannt. Diese Druckschrift beschreibt ein Luftansaugkanalsystem für eine Brennkraftmaschine mit V-förmig angeordneten Zylindern, wobei die Einzelansaugkanäle aus Passstücken aufgebaut sind und durch bewegbare Abdeckkörper verschlossen oder geöffnet werden können. Diese Abdeckkörper sind über Rippenelemente und Nabenelemente mit einer Antriebswelle verbunden, um durch ein Verdrehen der Antriebswelle die effektive Saugrohrlänge zu verändern. Dabei ist jeder Zylinderseite eine Antriebswelle zugeordnet. Als besonders kostengünstig und vorteilhaft hat es sich nun erwiesen die Abdeckkörper mit den zugehörigen Rippen- und Nabenelementen aus Kunststoff zu fertigen. Um ein Verdrehen der Abdeckkörper zu ermöglichen, ist die Wellen-Naben-Verbindung als formschlüssige Verbindung ausgebildet, wobei zwischen Welle und Naben noch zusätzlich Blattfedern angeordnet sind, die einen Presssitz schaffen. Die Montage eines derartigen Luftansaugkanalsystems ist dementsprechend zeit- und kostenaufwendig.

Hiervon ausgehend liegt der Erfindung daher die Aufgabe zugrunde, ein gattungsgemäßes Luftansaugkanalsystem zu schaffen, dass den oben genannten Nachteil vermeidet.

Diese Aufgabe wird durch das erfindungsgemäße Luftansaugkanalsystem dadurch gelöst, dass zumindest die zueinander gerichteten Flächen der Nabenelemente und der Antriebswelle aus einem schweißbaren Thermoplast, wie z. B. PE, PP, PVDF, PB, etc. bestehen, wobei ein Widerstandsdraht im Thermoplast des Nabenelementes eingegossen ist, derart, dass eine kraftschlüssige Wellen-Naben-Verbindung herstellbar ist. Auf diese Weise wird der Fertigungsaufwand minimiert und die Montage des Luftansaugkanalsystems wesentlich vereinfacht. An den im Thermoplast eingegossenen Widerstandsdraht wird bei der Montage der Nabenelemente auf die Antriebswelle derart unter Strom gesetzt, dass der Thermoplast sowohl der Nabe als auch der Antriebswelle, Schweißtemperatur erreicht und die nötige kraftschlüssige Verbindung hergestellt wird. Um eine höhere Verdrehsicherheit zu ermöglichen, kann die Wellen-Naben-Verbindung zusätzlich als formschlüssige Verbindung, beispielsweise als Vielkeilverbindung ausgeführt sein.

Ein Ausführungsbeispiel der Erfindung ist in der Zeichnung dargestellt und wird nachfolgend beschrieben.

Diese zeigt:
- Figur 1: einen Querschnitt eines Luftansaugkanalsystems,
- Figur 2: eine vergrößerte Ansicht einer Wellen-Naben-Verbindung aus Figur 1, und
- Figur 3: eine Seitenansicht im Schnitt der Wellen-Naben-Verbindung aus Figur 2.

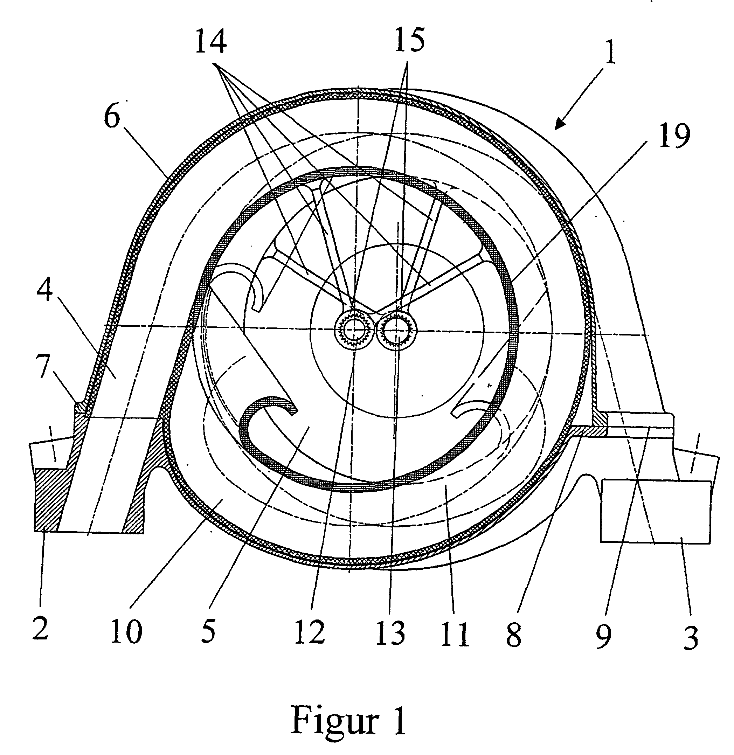

Figur 1 zeigt einen Querschnitt eines Luftansaugkanalsystems 1 für eine Brennkraftmaschine mit V-förmig angeordneten Zylindern, d. h. jeweils ein Einlassflansch 2,3 ist mit nicht dargestellten Zylinderreihen der Brennkraftmaschine zu verbinden. Dargestellt ist ein geschnittener Einzelansaugkanal 4, der von einem Sammeleinlasskanal 5 über den linken Einlassflansch 2 zu der Zylinderreihe führt. Das Luftansaugkanalsystem 1 weist ein äußeres Gehäuse 6 auf, dass aus wenigstens zwei Gehäuseteilen 7,8 besteht, die über Dichtflächen 9 miteinander verbunden sind und kanalbildende Passstücke 10,11 in ihrem Inneren aufweisen. Des weiteren sind Antriebswellen 12,13 dargestellt, die jeweils einer Zylinderreihe zugeordnet sind und die über Rippen- und Nabenelemente 14,15 mit Abdeckkörpern 19 verbunden sind. Die Rippen- und Nabenelemente 14,15 mit den dazugehörigen Abdeckkörpern 19 sind im vorliegenden Beispiel aus einem Thermoplast gegossen. Die Antriebswellen 12,13 weisen jeweils eine Kunststoffschicht 16 aus einem Thermoplast-Werkstoff auf. Insbesondere PE, PP, PVDF und PB sind als Thermoplast-Werkstoffe zu verwenden.

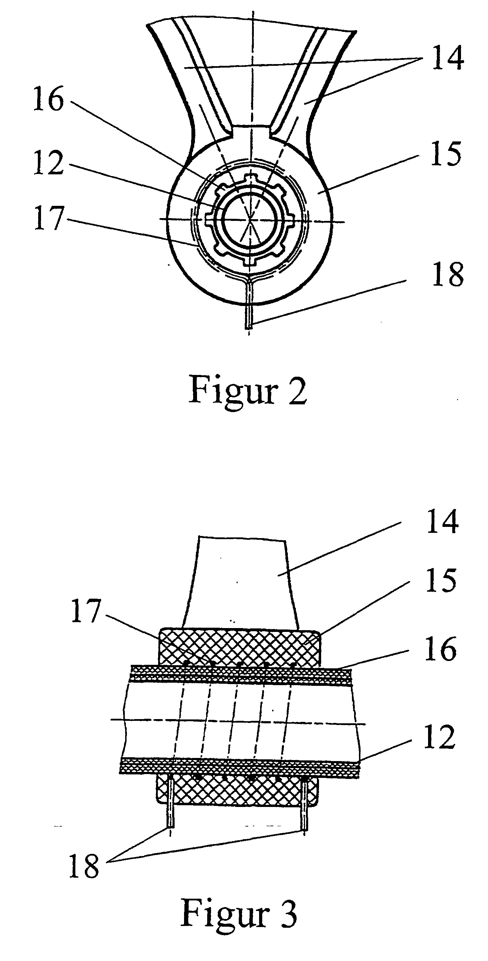

Figur 2 zeigt die Wellen-Naben-Verbindung 12,15 in einer vergrößerten Ansicht. In der Nabe 15 ist ein Widerstandsdraht 17 eingegossen, wobei der Widerstandsdraht 17 nach außen weisende Kontaktelemente 18 aufweist. Des weiteren weist sowohl die Innenfläche der Nabe 15 als auch die Thermoplastschicht 16 der Antriebswelle 12 ein aufeinander abgestimmtes Vielkeilprofil auf, so dass die Nabe in einem ersten Montagevorgang formschlüssig auf die Antriebswelle 12 angeordnet werden kann. In einem zweiten Montageschritt werden die Kontakte 18 an eine Stromquelle angeschlossen, bis Schweißtemperatur erreicht wird und eine Verbindung der Thermoplaste der Nabe 15 und der Thermoplastschicht 16 der Antriebswelle 12 stattfindet.

Figur 3 zeigt die Wellen-Naben-Verbindung 12,15 in einer Seitenansicht im Schnitt. Deutlich zu erkennen ist die Anordnung des Widerstandsdrahtes 17 im Thermoplast der Nabe 15, wobei bei diese Ausführungsform der Widerstandsdraht 17 nicht komplett vom Thermoplast der Nabe 15 umgeben ist, sondern zur Thermoplastschicht 16 gerichtet offen liegt.

## Patentansprüche

1. Luftansaugkanalsystem (1) für eine Brennkraftmaschine mit einem äußeren Gehäuse (6), dass aus mindestens zwei Gehäuseteilen (7, 8) besteht, die über Dichtflächen (9) miteinander verbunden sind, wobei das Gehäuse (6) einen Sammeleinlasskanal (5) aufweist, von dem zu Zylindern der Brennkraftmaschine führende Einzelansaugkanäle (4) abzweigen, die jeweils durch Rippenelemente (14) und Nabenelemente (15) mit einer Antriebswelle (12, 13) verbunden sind, derart, dass die effektive Saugrohrlänge durch ein Verdrehen der Antriebswelle (12, 13) veränderbar ist, **dadurch gekennzeichnet, dass** zumindest die zueinander gerichteten Flächen der Nabenelemente (15) und der Antriebswelle (12,13) aus einem schweißbaren Thermoplast, wie z. B. PE, PP, PVDF, PB etc. bestehen, wobei ein Widerstandsdraht (17) im Thermoplast des Nabenelementes (15) eingegossen ist, derart, dass eine kraftschlüssige Wellen-Naben-Verbindung herstelllbar ist.

2. Luftansaugkanalsystem nach Anspruch 1, **dadurch gekennzeichnet, dass** die Wellen-Naben-Verbindung zusätzlich als formschlüssige Verbindung, beispielsweise als Vielkeilverbindung, ausgeführt ist.

## Claims

1. Air intake duct system (1) for an internal combustion engine, with an outer housing (6) consisting of at least two housing parts (7, 8) which are connected together via sealing faces (9), wherein the housing (6) comprises an inlet manifold (5) off which individual intake ducts (4) branch, these leading to cylinders of the internal combustion engine and in each case being connected to a drive shaft (12, 13) by rib elements (14) and hub elements (15) such that the effective intake pipe length can be varied by rotating the drive shaft (12, 13), **characterised in that** at least the mutually facing faces of the hub elements (15) and the drive shaft (12, 13) consist of a weldable thermoplastic such as, e.g. PE, PP, PVDF, PB, etc., wherein a resistance wire (17) is cast in the thermoplastic of the hub element (15) such that a non-positive shaft-hub connection can be established.

2. Air intake duct system according to Claim 1, **characterised in that** the shaft-hub connection is additionally formed as a positive connection, for example as a multiple spline connection.

## Revendications

1. Système de conduits d'air d'admission (1) pour un moteur à combustion interne comprenant un carter extérieur (6), qui se compose au moins de deux parties de carter (7, 8) assemblées entre elles par l'intermédiaire de portées de joint (9), le carter (6) présentant un collecteur d'admission (5) dont partent des conduits d'admission individuels (4) menant aux cylindres du moteur à combustion interne, lesquels conduits sont respectivement reliés à un arbre moteur (12, 13) par des éléments d'ailettes (14) et des éléments de moyeux (15) de telle sorte que la longueur effective des conduits d'admission est modifiable par rotation de l'arbre moteur (12, 13), **caractérisé en ce qu'**au moins les surfaces dirigées les unes vers les autres des éléments de moyeux (15) et de l'arbre moteur (12, 13) se composent d'une matière thermoplastique soudable, telle que par exemple PE, PP, PVDF, PB etc., un fil de résistance (17) étant coulé dans la matière thermoplastique de l'élément de moyeu (15) de telle sorte qu'un assemblage arbre - moyeu par force d'adhérence peut être créé.

2. Système de conduits d'air d'admission suivant la revendication 1, **caractérisé en ce que** l'assemblage arbre - moyeu est réalisé en supplément sous forme d'assemblage par coopération de forme, par exemple sous forme d'assemblage à cales multiples.
